# EUROPEAN PATENT APPLICATION

(11) **EP 4 506 044 A1**
(43) Date of publication of application: **12.02.2025**
(21) Application number: 24193277.1
(22) Date of filing: 07.08.2024
(51) Int. Cl.: A63C 5/035, A63C 5/08, A63C 11/10, A63C 9/08, A63C 9/086, A63C 7/02, A63C 7/04, A63C 7/12

(54) **SKIING EQUIPMENT**

(30) Priority: 11.08.2023 IT 202300017271; 11.08.2023 IT 202300017280; 11.08.2023 IT 202300017286
(71) Applicant: E-outdoor S.A., 6828 Balerna (CH)
(72) Inventor: De Rosso, Mario, 22100 Como (IT); MURA, Ivan, San Giuliano Terme (IT); Colombo, Nicola, 6828 BALERNA (CH)
(74) Representative: Lunati & Mazzoni S.r.L.

(57) **Abstract**

Skiing equipment (1) is provided comprising a ski (2); a track (3) closed on itself and wound around the ski (2); a mover of the track (3) around the ski (2); a fastening group (4) for at least one binding defining together with the ski (2) a channel (4c) for the sliding of the track (3); and wherein the track (3) comprises a belt (31) wound longitudinally around the ski (2) and defining two ends (31a, 31b); and a hinge (32) constraining the ends (31a, 31b).

## Description

The present invention relates to skiing equipment of the type specified in the preamble of the first claim.

In particular, the equipment is usable for covering distances on lands, particularly on ground covered with snow. For example, the equipment subject of the present patent can be used for skiing such as ski mountaineering.

As is known, a ski is a long, flat tool worn on the feet to help sliding on snow.

Skis mainly consist of a sandwich of layers wherein, starting from the one distal to the surface in contact with the ground, there is an upper layer usually made of plastic, a torsion layer made of titanium or other similar material, a core mostly made of wood, a rubber pad, and a base made of graphite. This sandwich is laterally enclosed by two side rails, called flanks, and by steel edges in contact with the ground. Furthermore, since the sliding on snow is allowed by the formation of a thin film of water, wax, i.e., a layer of wax or other material used to raise the freezing point of water under the ski, is often applied to the base of the ski.

It is therefore obvious how skis are excellent for tackling downhill slopes but are difficult to use for climbing slopes.

For this reason, climbing slopes is performed by covering the ski base with sealskins capable of ensuring greater grip for the ski and thus moving forward and gripping while climbing.

Current sealskins are synthetic and adopt a first adhesive face capable of removably adhering to the ski base (the part in use in contact with the snow), and a second face covered with oriented textile fibers designed to interfere with the snow cover so as to slide forward without slipping backward.

The known technique described includes some important drawbacks.

In particular, sealskins are prone to easy deterioration and require frequent maintenance.

Another drawback is that skis with sealskins are difficult and extremely demanding and tiring to use, requiring considerable physical effort. They can therefore only be used by expert and particularly trained users.

Another significant drawback is that sealskins are difficult to apply to the ski.

It should be noted that to solve these drawbacks, some solutions have been identified involving the adoption of tracks to be applied onto the ski. In particular, WO2022262994A1, DE202012101242, and US20220203210 describe the adoption of two lateral tracks for each ski; US3964560A and WO2020216220 teach the making of a ski whose rear part differs from normal skis due to the introduction of a track.

However, these solutions have little use due to the high cost and the difficulties of implementation in a known ski. Indeed, these solutions require significant structural modifications to the ski and/or complex assembly and disassembly operations. Furthermore, the solutions of US3964560A and WO2020216220 significantly degrade the performance of the ski, especially during its normal use, for example, downhill.

Another non-secondary drawback is represented by the difficulties in controlling and commanding the track movement motors.

Another further drawback of these solutions is their complex construction and high cost.

In this context, the technical task underlying the present invention is to design skiing equipment capable of substantially overcoming at least part of the mentioned drawbacks.

Within this technical task, an important object of the invention is to obtain skiing equipment that allows easy tackling even when climbing a slope.

Another object of the invention is to make skiing equipment that can be easily implemented even on a known ski and is easy to use.

A further important object of the invention is to make skiing equipment of increased construction simplicity and reduced cost.

The technical task and specified objects are achieved by skiing equipment as claimed in the attached claim 1. Preferred embodiments are described in the dependent claims.

The features and advantages of the invention are clarified by the detailed description of preferred embodiments of the invention, with reference to the accompanying drawings, wherein:
**Fig. 1** shows, to scale, a view of the skiing equipment according to the invention;
**Fig. 2** illustrates, to scale, a side view of the skiing equipment of Fig. 1;
**Fig. 3** shows, to scale, a section of an assembly of the skiing equipment according to the invention;
**Fig. 4** shows, to scale, a subassembly of Fig. 3;
**Fig. 5** illustrates, to scale, a portion of the track of the skiing equipment according to the invention;
**Fig. 6** is a representation, to scale, of a detail of Fig. 5;
**Fig. 7** shows, to scale, a portion of the skiing equipment;
**Fig. 8** highlights, to scale, a part of Fig. 7 from a different angle;
**Fig. 9** shows, to scale, another portion of the skiing equipment;
**Fig. 10** shows, to scale, an end of the skiing equipment according to the invention in a first position;
**Fig. 11** displays, to scale, the end of Fig. 10 in a second position;
**Fig. 12** proposes, to scale, the other end of the skiing equipment according to the invention in said first position; and
**Fig. 13** exhibits, to scale, the end of Fig. 12 in said second position.

In this document, the measures, values, shapes, and geometric references (such as perpendicularity and parallelism), when associated with words like "approximately" or other similar terms such as "substantially" or "essentially," are to be understood as within the limits of measurement errors or inaccuracies due to production and/or manufacturing errors and, above all, within a slight deviation from the value, measure, shape, or geometric reference associated with them. For example, such terms, if associated with a value, preferably indicate a divergence not exceeding 10% of the value itself.

Furthermore, when used, terms such as "first," "second," "upper," "lower," "main," and "secondary" do not necessarily identify an order, a priority of relation, or relative position but may simply be used to more clearly distinguish between different components.

Unless otherwise indicated, terms like "perpendicular," "transversal," "parallel," or "normal" or other geometric positioning terms between geometric elements (e.g., axes, directions, and lines) are to be understood in reference to their mutual geometric position between the corresponding projections. These projections are defined on a single plane parallel to the one(s) on which said geometric elements lie. It is also noted that these geometric positioning terms are to be referred to in accordance with the skiing equipment when mounted and thus ready for use or in use.

The measurements and data reported in this text are to be considered, unless otherwise indicated, as carried out in International Standard Atmosphere ICAO (ISO 2533:1975).

With reference to the Figures, the skiing equipment according to the invention is globally indicated by the number 1.

It is configured to be used for covering distances on lands and particularly on ground covered with snow, suitably in uphill and/or downhill slopes. For example, the equipment 1 can be used for skiing such as ski mountaineering.

The equipment 1 defines a condition "in use" when worn by the user and in contact with the ground 1a.

The skiing equipment 1 comprises at least one ski 2 defining a longitudinal direction **2a** and two ends, and in particular, a front end **2b** and a rear end **2c.** Preferably it comprises two skis 2.

The longitudinal direction 2a is preferably barycentric to the ski 2.

The ski 2 can also define a development plane, suitably barycentric to the ski 2, on which the longitudinal direction 2a lies.

The front 2b and rear 2c ends are defined according to the forward movement direction of the skiing equipment 1 and precisely of the ski 2 in use.

The ski 2 can be substantially straight. It thus defines a straight longitudinal direction 2a and a flat laying plane.

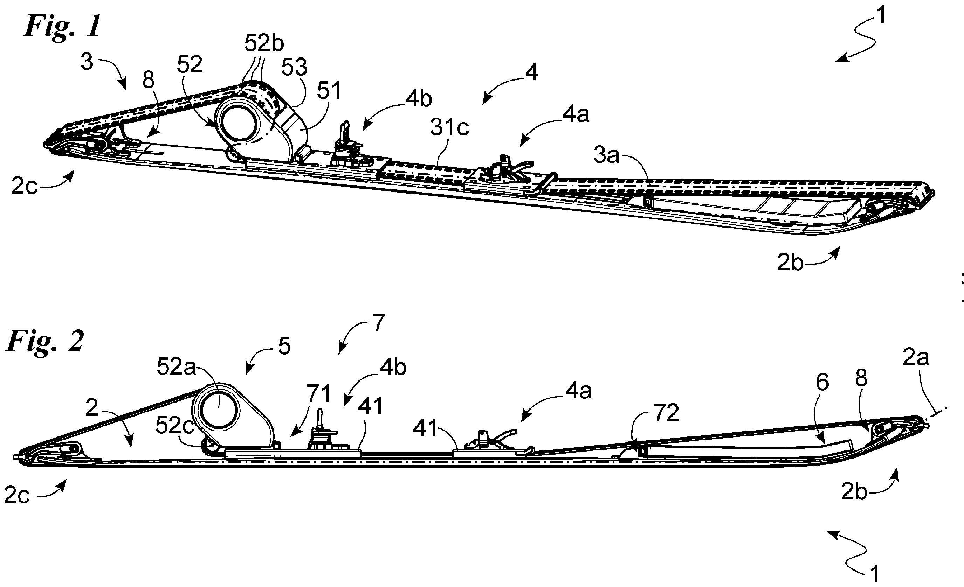

Alternatively (as shown in Figs. 1 and 2), it can have ends curved upwards (i.e., opposite to the ground when the equipment 1 is in use) one end 2b or 2c or both ends 2b and 2c with equal or different curvature. In this case, the direction 2a can define a central straight portion and those at the ends 2b and/or 2c curved; consequently, the development plane has a flat central part and the curved end parts.

In use, the longitudinal direction 2a and thus the laying surface can be parallel to the ground at least at the central portion.

The section of the ski 2 can be any. For example, it can be constant and preferably have tapered ends 2b and 2c, or it can be sidecut, i.e., parabolic in shape: narrow in the center and wider near the ends 2b and 2c suitably tapered.

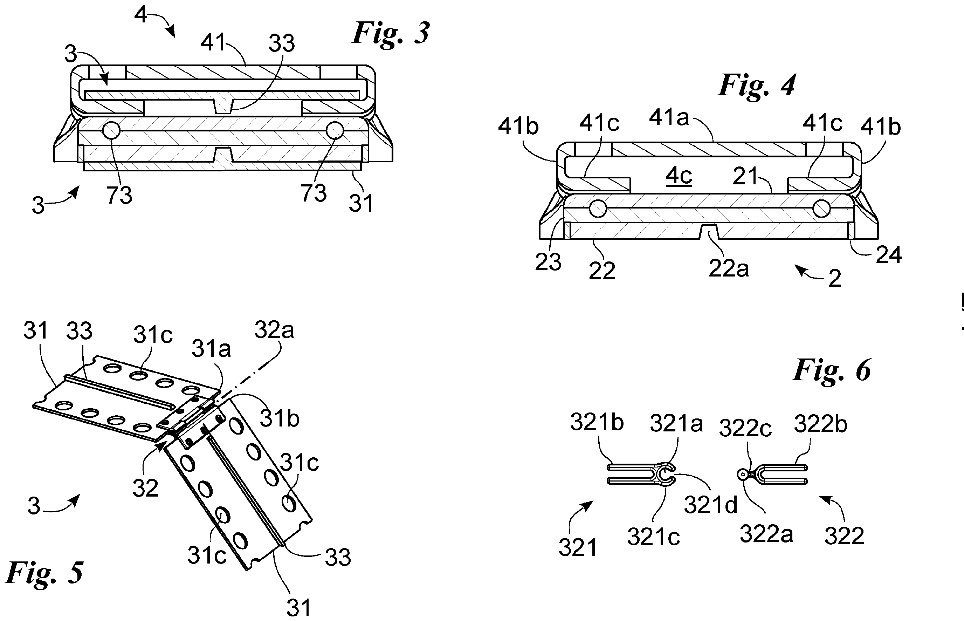

The structure of the ski 2 (Figs. 3-4) can be sandwiched. In particular, the ski 2 comprises an upper layer **21** and a lower layer **22** mutually coupled defining the structure of the ski 2. More in detail, it comprises one or more intermediate layers **23** interposed between the upper layer 21 and the lower layer 22.

The lower layer 22 is configured to lay in use next to the ground. It can identify said ski base.

These layers can be made of one or more materials chosen from polymeric, resin, metallic (for example titanium), composite (for example carbon fiber), or wood. The ski 2 can comprise at least one edge **24** extending for at least part and in detail for the entire length of the ski along the longitudinal direction 2a.

Suitably, it extends for at least the central part of said ski 2.

The edge 24 can define a lateral edge of at least the lower layer 22 and, in some cases, of the ski 2 in use facing and in detail in contact with the ground 1. Preferably, the ski 2 comprises two edges 24 each placed at a lateral edge of at least the lower layer 22.

The skiing equipment 1 comprises, suitably for each ski 2, a track 3 closed on itself and wound longitudinally around the ski 2.

When present, the track 3 is configured to come into contact with the ground in place of the ski 2.

The track 3 thus defines a development trajectory **3a** (Fig. 1) of the track itself, closed and enclosing the ski 2, i.e., it defines on a plane parallel to the direction 2b (in detail perpendicular to the laying plane) and substantially perpendicular to the section of the ski 2, a closed path enclosing within it the entire ski 2.

The development trajectory 3a defines a laying plane of the same trajectory 3a suitably perpendicular to the laying plane.

Preferably, if barycentric, the development trajectory 3a and the longitudinal direction 2b lie on said laying plane.

In use, the development trajectory 3a and the longitudinal direction 2b can be perpendicular to the ground.

The track 3 (Fig. 5) can comprise a belt **31** wound longitudinally around the ski 2 and defining a first end **31a** and a second end **31b,** and a hinge **32** constraining the ends 31a and 31b together, closing the belt 31 and thus the track 3.

The belt 31 can be layered and comprise levels mutually coupled to each other forming the belt 31. In detail, the belt 31 comprises one or more structural levels (i.e., one or more superimposed and coupled layers configured to define the structural part of the belt 31 and thus support the loads acting on the belt 31 and preferably an external level configured to come into contact with the ground when the equipment 1 is in use.

The external level can be of high friction with the ground. In particular, it can at least have a surface finish resembling sealskin or another finish configured to allow forward movement in only one travel direction.

The one or more structural levels can be made of composite material.

The belt 31 and in particular the track 3 have an extension, calculated perpendicularly to the laying plane of the development trajectory 3a of the track 3, substantially not exceeding and in detail substantially less than that of the ski 3. Preferably, they have said extension substantially not exceeding that of the lower layer 22 so as not to overlap at least one edge 24.

The hinge 32 is configured to constrain the ends 31a and 31b, suitably allowing the ends 31a and 31b at least a mutual rotation along a rotation axis **32a** substantially perpendicular to the longitudinal direction 2a and in particular substantially perpendicular to the laying plane of the development trajectory 3a of the track 3. The hinge 32 defines a rotation angle between the ends 31a and 31b preferably at least equal to ± 120° compared to when the ends 31a and 31b are aligned along the trajectory 3a.

The hinge 32 has an extension, calculated perpendicularly to the laying plane of the development trajectory 3a, substantially not exceeding 100% and in detail substantially less than 100% (precisely 75%) and substantially at least equal to 30% of the extension of the belt 31 also calculated perpendicularly to the laying plane of the trajectory 3a.

The hinge 32 has a length, calculated along the development trajectory 3a of the track, substantially between 5 mm and 50 mm.

The hinge 32 has a height, calculated along the laying plane of the trajectory 3a and perpendicular to said trajectory 3a, substantially at least equal to that of the belt 31 and in detail substantially between 100% and 500% of the height of the belt 31. The hinge 32 is centred to the trajectory 3a and in detail to its laying plane so as not to overlap with the side edges of the belt 31 (i.e., the sides at the greatest distance from said laying plane).

The hinge 32, highlighted in Fig. 6, can comprise a first slat **321** integral with the first end 31a and a second slat 322 integral with the second end 31b.

The first slat 321 can comprise a seat **321a** defining a first axis of predominant extension substantially parallel to the rotation axis 32a and thus normal to the laying plane of the development trajectory 3a.

The second slat 322 can comprise a wedge **322a** defining a second axis of predominant extension substantially parallel to the rotation axis 32a and thus normal to the laying plane of said trajectory 3a.

The wedge 322a is configured to be inserted into the seat 321a, constraining the first slat 321 to the second slat 322 and thus the first end 31a to the second end 31b.

The first and second axes of predominant extension are approximately parallel to each other and, in detail, coincident when the wedge 322a is in the seat 321a.

The wedge 322a and the seat 321a suitably have a circular section (they can be cylindrical, for example) to rotate mutually allowing the rotation between the slats 321 and 322 and thus the hinge 32 to slide along the entire development trajectory 3a.

The first slat 321 is integrally and suitably releasably constrained to the first end 31a.

It can comprise a first plate **321b** constrained to the belt 31 at the first end 31a and at least one hollow cylinder **321c** and defining the seat 321a. Preferably, the first slat 321 comprises multiple hollow cylinders 321c (precisely two cylinders 321c) mutually spaced along the first predominant extension axis.

The first plate 321b can comprise a first housing for the first end 31a, preferably defining a first direction of insertion of the first end 31a into said first housing. It is identifiable in a C-section element extending along the normal to the laying plane of the trajectory 3a preferably for said extension of said first slat 321.

The first plate 321b can be integrally and suitably releasably constrained to the first end 31a by, for example, countersunk head screws housed in the same first plate 321b.

The seat 321a can be a blind hole to allow the wedge 322a to be inserted into the seat by translation relative to the seat 321a in one direction only. Consequently, only one of the at least one cylinder 321c can define said blind hole, while the possible one or more additional cylinders 321c define a through hole.

The second slat 322 can comprise a second plate **322b** constrained to the belt 31 at the second end 31b and at least one gangway **322c** (preferably one only) protruding from the second plate 322b interposed between the wedge 322a and the second plate 322b and thus integrally constraining the wedge 322a to the second plate 322b.

In use, the gangway 322c defines an extension of the second plate 322b along the trajectory 3a.

Suitably, at least when the slats 321 and 322 are mutually engaged, the at least one gangway 322c is interposed between two cylinders 321c so that the slats 321 and 322 can rotate mutually without the gangway 322c hitting a cylinder 321c. Consequently, the extension calculated along the axis 32a of each gangway 322c is not greater and in detail less than the distance between two adjacent cylinders 321c.

It is noted that, to allow the insertion of the wedge 322a into the seat 321a, each cylinder 321c can comprise at least one notch **321d** for the passage of the gangway 322c when the wedge 322a is moved relative to said seat 321a.

In use, the notch 321d defines an extension of the first plate 321b along the trajectory 3a.

Said notch 321d allows the insertion and extraction of the wedge 322a from the seat 321a only when the gangway 322c is aligned with the notch 321d (i.e., overlapping along the rotation axis 32a. Preferably, the notch 321d is made opposite to the first plate 321 b to allow the movement of the wedge 322a relative to the seat 321a when the plates 321 b and 322b and thus the ends 31a and 31b are substantially coplanar. In detail, the notch 321d allows the insertion and extraction of the wedge 322a from the seat 321a only when the first insertion direction and the second insertion direction are aligned and define the continuation of one another.

The second plate 322b can comprise a second housing for the second end 31b, preferably defining a second insertion direction of the second end 31b into said second housing. It is identifiable in a C-section element extending along the normal to the laying plane of the trajectory 3a suitably for said extension of said second slat 322.

The track 3 can comprise a rib **33** protruding from the belt 31, and the ski 2 comprises a groove **22a,** suitably made at least at the lower layer 22, for the sliding of the rib 33.

The rib 33 protrudes from the belt 31 towards the ski 2. It thus protrudes from the face of the belt 31 facing the ski 2.

The rib 33 can extend for the entire length of the belt 31 along the development trajectory 3a.

The groove 22a can extend for the entire length of the lower layer 22.

The skiing equipment 1 can comprise, suitably for each ski 2, a fastening group 4 to the same ski 2 of at least one binding and in detail only one binding. Optionally, the equipment 1 can comprise for each ski 2 at least one binding and in detail only one binding.

Each binding is a ski binding. It is configured to allow the fastening of the footwear (precisely a boot) of a user to the ski 2. It can comprise a tip portion **4a** configured to engage at the tip of the boot and a heel portion **4b** configured to engage at the heel of the boot.

When constrained to the ski 2, the fastening group 4 defines together with the ski 2 a channel **4c** for the sliding of the track 3, which thus slides along a section of the trajectory 3a in said channel 4c.

The channel 4c can have an extension, calculated perpendicularly to the laying plane of the development trajectory 3a of the track 3, substantially at least equal to that of the belt 31.

The fastening group 4 can comprise at least one profile **41** constrained to the ski 2 and engaging the binding, extending along a section of the longitudinal direction 2a and in particular along part of the central straight section of the longitudinal direction 2a.

In particular, it comprises a single profile 41 engaging the tip portion 4a and the heel portion 4b. Alternatively, it can comprise two profiles 41, a first profile 41 engaging the tip portion 4a and a second profile 41 engaging the heel portion 4b, separated along the longitudinal direction 2a by the first profile 41.

The constraint of the tip portions 4a and/or heel 4b to the profile 41 can be done via screws or other known constraint means.

It is noted that the constraint point of the tip portions 4a and/or heel 4b to the corresponding profile 41 can be varied to allow an adjustment of their mutual distance along the longitudinal direction 2a.

This adjustment can be continuous. In this case, the fastening group 4 comprises, for example, for each portion 4a, a guide integral with the profile 41 defining a sliding axis parallel to the direction 2a, a carriage constrainable to said portion 4a or 4b sliding along the guide, and a stop for the sliding of the carriage along the guide. Alternatively, the adjustment can be discrete. In this case, the fastening group 4 comprises, for example, a series of holes made on the profile 41 and spaced along the direction 41a and means for locking each portion at one or more of said holes. Each profile 41 has a C-section to define together with the ski 2 the mentioned channel 4c. It can comprise a base wall **41a** and two side walls **41b.**

The length, calculated along the direction 2a, of the channel 4c is less than that of the ski 2 and in particular substantially between 10% and 70% of said length of the ski 2 also calculated along the direction 2a.

The height, calculated between the base 41a and the ski 2 along the laying plane of the direction 2a, of the channel 4c is at least equal to that of the track 3 (i.e., the belt 31 and the possible rib 33) and in detail between 100% and 500% of that of the track 3.

The width, calculated between the side walls 41b along the laying plane of the direction 2a and perpendicularly to said direction, of the channel 4c is less than the width of the ski 2 (calculated along the same direction) and in particular substantially between 50% and 95% of said width of the ski 2.

The base wall 41a can be flat and in detail parallel to the ski 2 (suitably to the laying plane) and in detail to the section of the ski 2 to which it is superimposed along a normal to the longitudinal direction 2a.

The base wall 41a can have a width substantially equal to that of the ski 2. Said width is calculated perpendicularly to the direction 2a and in detail parallel to the laying plane.

The side walls 41b are underpinned between the ski 2 and the base wall 41a, thus spaced from the ski 2 defining said channel 4c. Consequently, the sliding channel 4c is bounded above by the base wall 41a, below by the ski 2, and laterally by the side walls 41b.

The side walls are perpendicular to the base wall 41a and/or the laying plane. The height of each of the side walls 41b is less than 5 cm and in detail less than 3 cm. Said height is calculated perpendicularly to the direction 2a and in detail to the laying plane.

Optionally, each side wall 41b comprises a slat **41c** for supporting the ski 2.

The slat 41c has a greater width than the rest of the side wall 41b and less than 25% and in detail less than 10% of the width of the ski. Said width, as specified above, is calculated along a direction perpendicular to the direction 2a and in detail parallel to the laying plane.

The fastening group 4 can comprise a profile constraint 41 to the ski 2.

The constraint is configured to integrally constrain the profile 41 to the ski 2 via, for example, a threaded binding. It can comprise at least one screw configured to engage at least in a threaded housing of the ski 2. Preferably, the screw is configured to fasten the slat 41c to the ski 2. More preferably, the slat 41c comprises a countersink for housing the entire head of the screw, which thus does not protrude into the channel 4c.

To control the track 3, the equipment 1 can comprise, suitably for each ski 2, a mover **5** for controlling the sliding of the track 3 around the ski 2.

The mover 5 (Figs. 1 and 2) can comprise a motor **51,** preferably electric, and suitably a transmission **52** of motion from the motor 51 to the track 3, and in particular to the belt 31.

The transmission 52 can comprise at least one driving pulley **52a** configured to engage the track 3 and in detail the belt 31 to transmit the torque output from the motor 51 to the belt 31 and thus to the track 3.

In detail, the belt 31 comprises at least one row of slots **31c,** preferably through slots, and the driving pulley 52a comprises at least one row of teeth **52b** engaging the slots 31c. In detail, the teeth 52b are configured to be inserted into said slots 31c and drag the track 3. Suitably, to prevent contact between the teeth 52b and the hinge 32, the slots 31c are made at least at one of the side edges of the belt 31, and thus the teeth 52b are located at least at one of the side edges of the driving pulley 52a.

More in detail, the belt 31 comprises two rows of slots 31c each made at one side edge of the belt 31, and the driving pulley 52a comprises two rows of teeth 52b each located at one side edge of the driving pulley 52a.

The height of each tooth 52a can be at least equal to and in detail greater than the thickness of the belt 31.

The transmission 52 can comprise a one-way clutch cinematically interposed between the motor 1 and driving pulley 52a and configured to allow the rotation of the driving pulley 52a in one direction only and prevent it in the other direction. The transmission 52 can also comprise a tensioner **52c** configured to maintain the tension of the belt 31.

The tensioner 52c can comprise a driven pulley on which the belt runs and an actuator configured to press said driven pulley against said belt 31, ensuring its proper tensioning.

The driven pulley can comprise supplementary teeth engaging the slots 31c. Alternatively, it can be without said supplementary teeth.

The mover 5 can also comprise a frame **53** configured to constrain the transmission 52 to the motor 51 to allow and make the entire mover 5 integral to the rest of the skiing equipment 1 by constraining the motor 51 to the ski 2 as described below. The skiing equipment 1 can comprise, suitably for each ski 2, a battery **6** for powering the mover 5, particularly the motor 51.

The skiing equipment 1 can comprise, suitably for each ski 2, a connection apparatus **7.**

The connection apparatus 7 is configured to integrally, preferably releasably, constrain the mover 5 to the ski 2.

It is configured to integrally, preferably releasably, constrain the battery 6 to the ski 2.

The apparatus 7 is also configured to define an electrical connection between the mover 5 and the battery 6.

The connection apparatus 7 can comprise a first fastening **71** of the mover 5 to the ski 2; a second fastening **72** of the battery 6 to the ski 2, suitably on the opposite side to the first fastening 71 and thus to the mover 5 with respect to the fastening group 4; and at least one cable **73** interposed between the layers 21, 22, and/or 23 of the ski 2. Preferably, the apparatus 7 comprises two cables 73.

The first fastening 71 is configured to integrally constrain the mover 5, particularly the motor 51, to the ski 2. It is also configured to define an electrical connection between the motor 51 and at least one cable 73.

The first fastening 71 is configured to directly constrain the mover 5 to the ski 2. Alternatively, as shown in the figures, it is configured to indirectly constrain the mover 5 to the ski 2 and precisely to constrain the mover 5 to the fastening group 4 (in detail to a profile 41, preferably associated with the heel portion 4b), which is then constrained to the ski 2.

The second fastening 72 is configured to integrally constrain the battery 6 to the ski 2. Additionally, it is configured to define an electrical connection between the battery 6 and at least one cable 73.

Consequently, the at least one cable 73 electrically connects the bindings 71 and 72 and thus the battery 6 to the motor 51.

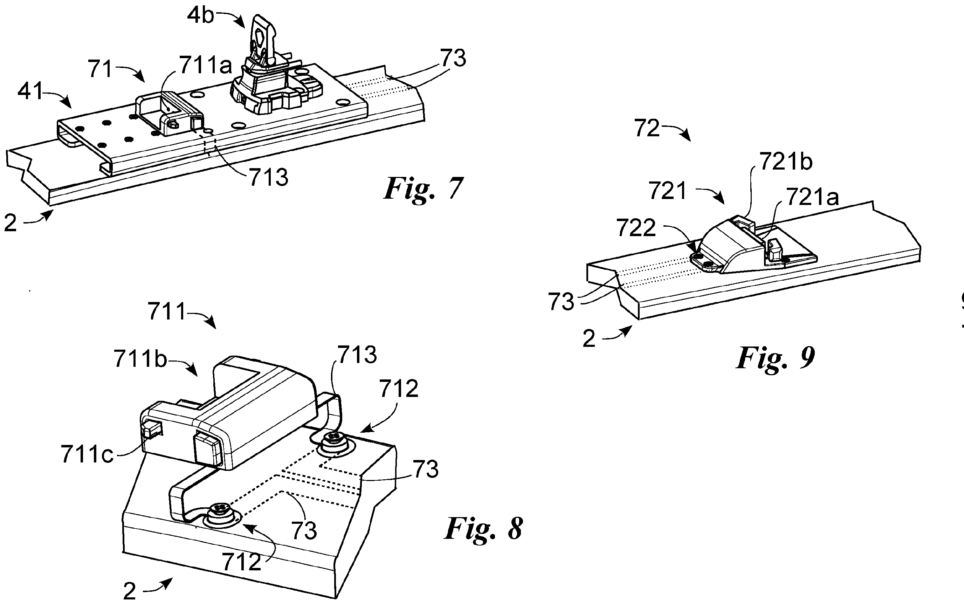

The first fastening 71 (Figs. 7 and 8) can be integrally and suitably releasably constrained to the ski 2.

It can comprise a first connector **711** defining an electrical connection with the motor 51 and a mechanical constraint with the mover 5.

The first connector 711 can comprise a first housing **711a** for at least part of the mover 5, for example, the motor 51; first electrical means **711b** defining said electrical connection when the motor 711 is in the first housing 711a; and first constraint means **711c** to the first housing 711a of the mover 5 (for example, the motor 51) when it is in the first housing 711a.

The first electrical means 711b and constraint means 711c can optionally coincide and, for example, be identified in a socket or a jack. It is noted that the motor 51 can be equipped with electrical and constraint means able to engage said first means 711a and 711b, achieving said electrical connection to said constraint.

The first connector 711 can be integral to the base wall 41a.

The first fastening 71 can comprise at least one first supplementary connector **712** defining a mechanical constraint with the ski 2, i.e., between the first fastening 71 and the ski 2, and an electrical connection with said at least one cable 73, i.e., between the same first supplementary connector 712 and cable 73. Preferably, the first fastening 71 comprises two first supplementary connectors 712, each defining an electrical connection with one of the cables 73.

The first supplementary connector 712 (highlighted in Fig. 8) can comprise a first cavity made in the ski 2 and a first jack integral with the first fastening 71 and configured to be inserted into said first cavity, achieving said mechanical constraint with the ski 2 and said electrical connection with at least one cable 73.

The first cavity can be in electrical connection with a cable 73.

The first jack can comprise a pin configured to be inserted into the first cavity, achieving the electrical connection between the first fastening 71 and at least one cable 72, and first clamping means configured to clamp the first pin in the first cavity, achieving a mechanical constraint between the first fastening 71 and the ski 2.

In a non-limiting embodiment, the first cavity can be a female jack, and the first jack can be a male jack configured to mate with said female jack. In another non-limiting embodiment, the first cavity can comprise a conductive wall in electrical connection with a cable and a threaded portion, and the first jack can comprise a conductive cylinder configured to contact the conductive wall and a screw configured to engage said threaded portion, clamping the cylinder against said conductive wall.

The first jack can be at least partly integral to a side wall 41b and, precisely, to a slat 41c.

The first fastening 71 can comprise, for each first supplementary connector 712, a first electrical connection **713** defining an electrical connection between the first connector 711 and each first supplementary connector 712. Preferably, it comprises two first supplementary connectors 712, each defining an electrical connection between the first connector 711 and a first supplementary connector 712.

The first electrical connection 713 is integrated into said section of the profile 41. In detail, it can comprise a section integrated into the base wall 41a and a further section integrated into a side wall 41b.

The first electrical connection 713 comprises, for example, a printed conductor and/or a wire integrated into the profile 41.

The second fastening 72 (Fig. 9) can be integrally and suitably releasably constrained to the ski 2, and in detail to the upper layer 21.

It can comprise a second connector **721** defining an electrical connection and a mechanical constraint with the battery 6, i.e., between the battery 6 and the second connector 721.

The second connector 721 can comprise second electrical means **721a** defining said electrical connection between the battery 6 and second constraint means **721b** of the battery 6 to the second connector 721.

The second electrical means 721a and second constraint means 721b can optionally coincide and, for example, be identified in known solutions such as a socket or a jack. It is noted that the battery 6 can be equipped with similar electrical and constraint means able to engage said second means 721a, thus achieving said electrical connection and mechanical constraint.

The second fastening 72 can comprise at least one second supplementary connector **722** defining a mechanical constraint with the ski 2, i.e., between the second fastening 72 and the ski 2, and an electrical connection with said at least one cable 73, i.e., between the second supplementary connector 722 and cable 73. Preferably, it can comprise two second supplementary connectors 722, each defining an electrical connection with one of the cables 73.

The second supplementary connector 722 can comprise a second cavity made in the ski 2 and a second jack integral with the second fastening 72 and configured to be inserted into said second cavity, achieving the mechanical constraint with the ski 2 and the electrical connection with at least one cable 73.

The second cavity can be in electrical connection with a cable 73.

The second jack can comprise a pin configured to be inserted into the second cavity, achieving the electrical connection between the second fastening 72 and at least one cable 72, and second clamping means configured to clamp the second pin in the second cavity, achieving a mechanical constraint between the second fastening 72 and the ski 2.

In a non-limiting embodiment, the second cavity can be a female jack, and the second jack can be a male jack configured to mate with said female jack. In another non-limiting embodiment, the second cavity can comprise a conductive wall in electrical connection with a cable and a threaded portion, and the second jack can comprise a conductive cylinder configured to contact the conductive wall and a screw configured to engage said threaded portion, clamping the cylinder against said conductive wall.

Finally, the second fastening 72 can comprise, for each second supplementary connector 722, a second electrical connection (for simplicity not shown in the figure) defining an electrical connection between the second connector 721 and said second supplementary connector 722.

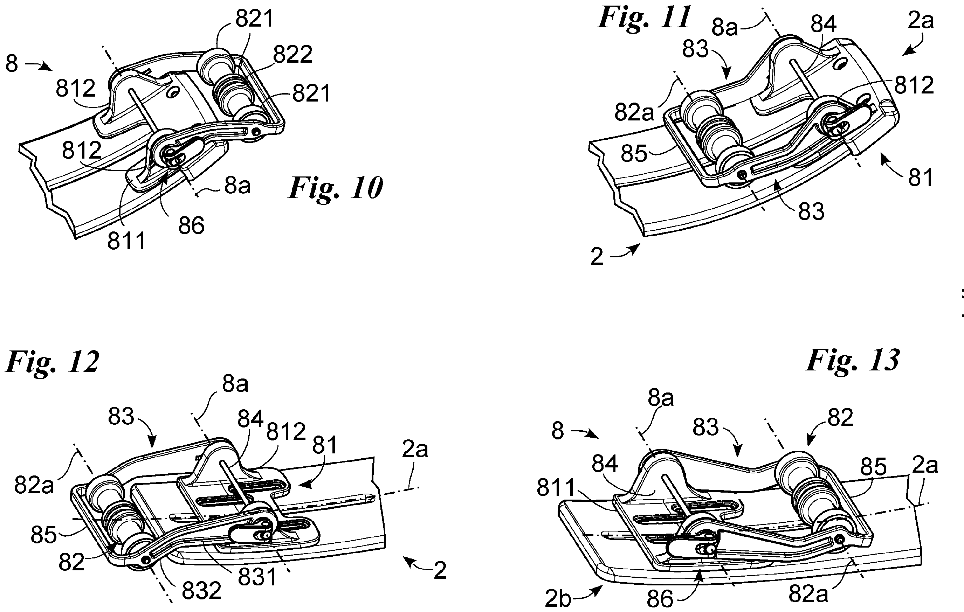

Moreover, to allow the track 3 to slide around the ski 2, the skiing equipment can comprise, suitably for each ski 2, at least one return block 8 of the track 3, each located at an end 2b and 2c. It can thus provide a return block 8 at the front end 2b (Figs. 10-11) and a return block 8 at the rear end 2c (Figs. 12-13).

Each return block 8 can comprise an anchor **81** configured to be integrally constrained to the ski 2; a roller **82** for sliding of the track 3; at least one arm **83** constraining the roller 82 to the anchor 81; and preferably a hinge **84** configured to allow a rotation of the arm 83 and the roller 82 relative to the anchor 81, defining a tilting axis **8a** substantially perpendicular to the laying plane of the development trajectory 3a.

Preferably, the return block 8 comprises two arms 83 placed opposite the roller 82, which is thus enclosed between said arms 83. Suitably, in this case, the return block 8 comprises a bridge **85** underpinned between the two arms 83, thus defining together with the roller 81 a closed frame within which the track 3 passes.

The hinge 84 is configured to allow a rotation of the arm 83 and the roller 82 relative to the anchor 81, defining, for the return block 8, an operating position (Figs. 10 and 12) wherein the roller 82 protrudes at least partially and in detail entirely from the ski 2; and an inactive position (Figs. 11 and 13) wherein the roller 82 is entirely overlapped with the ski 2.

The anchor 81 comprises a plate **811** for constraining the ski 2 and, for each arm 83, a wing **812** protruding from the plate 811 on the opposite side to the ski 2.

The plate 811 can comprise a compartment for the insertion of the end 2b or 2c of the ski 2. In particular, the return block 8 of the front end 2b comprises a plate 811 equipped with said compartment to allow the front end 2b to be inserted into this housing compartment and thus into said anchor 81.

The roller 82 is hinged, suitably freely, to the arm 83 to rotate relative to the arm 83 around a sliding axis **82a** suitably parallel to the tilting axis 8a.

Preferably, to facilitate the sliding of the track 3, in the operating position, the sliding axis 82a is placed opposite the tilting axis 8a relative to the longitudinal direction 2a and in particular to the development surface of the ski 2. In other words, the sliding axis 82a has a shorter distance from the ground relative to the longitudinal direction 2a.

The sliding axis 82a is next to the lower layer 22. Preferably, the lower layer 22 (in detail its ideal extension along the trajectory 2a) is interposed between the sliding axis 82a and the longitudinal direction 2a.

Preferably, the distance between the sliding axis 82a and the longitudinal direction 2a is less than the radius of the roller 82 and suitably less than the difference between the radius of the roller 82 and the thickness of the ski 2 at said end 2b or 2c.

Consequently, in the operating position, the outer the roller 82 protrudes from both visible surfaces (upper and lower) of the ski 2 and thus from both the upper layer 21 and the lower layer 22. This solution thus ensures optimal sliding of the track 3 at said end 2b or 2c.

In the inactive position, the sliding axes 82a and tilting axis 8a are on the same side relative to the longitudinal direction 2a and, precisely, at the upper layer 21. In other words, the sliding axis 82a has a greater distance from the ground relative to the longitudinal direction 2a.

The sliding axis 82a is next to the lower layer 22.

The distance between the sliding axis 82a and the tilting axis 8a can be greater than the diameter of the roller 82.

Said distance between the axes 82a and 8a can be approximately less than 30%, in detail 10%, more in detail 5%, and suitably between 5% and 1% of the length of said ski 2.

The distance between the axes 82a and 8a can be less than 10 cm, in detail 7.5 cm, and more in detail 5 cm.

The roller 82 has a length, calculated along the sliding axis 82a, substantially between 50% and 150% of the extension of the belt 31 along the sliding axis 82a.

The roller 82, as shown in Fig. 10, can comprise a central portion and at least one ring **821** of a larger diameter than the central portion and configured to exclusively contact the track 3, particularly at least the belt 31. Preferably, it comprises multiple rings 821 and, in detail, at least two rings 821 configured to contact the belt 31 at the side edges of the belt itself, and in some cases, a central ring 821 configured to contact the central portion of the belt 31.

Said ring 821 can comprise a slot **822** for the sliding of the rib 33.

Each ring 821 and thus the roller 82 can have a diameter less than 50% and in detail substantially between 50% and 10% of the distance between the axes 82a and 8a. The ring 821 and thus the roller 82 can be without teeth engaging the slots 31c. Each arm 83 is underpinned between the sliding axis 82a and the tilting axis 8a. It comprises a first rod **831** defining a first longitudinal axis and constrained to said hinge 84 and a second rod **832** defining a second longitudinal axis and hinged to the roller 82.

The first rod 831 has a length substantially equal to the distance between said tilting axis and the end 2b or 2c.

The second rod 832 can have a length substantially at least equal to the diameter of the roller 82 and in detail of the ring 821.

The longitudinal axes and thus the rods 831 and 832 are mutually inclined at an angle between 170° and 120°.

Each return block 8 can comprise a stop **86** configured to block the rotation of the arm 83 and the roller 82 relative to the anchor 81.

The stop 86 can be configured to block the rotation of the arm 83 and the roller 82 relative to the anchor 81 at least in the operating and inactive positions, thus stably locking the block 8 in said positions.

The stop 86 can block said rotation by form interference, friction, geometric bindings. Preferably, it is a quick-release locking system to allow rapid blocking or unblocking of said rotation. It can be activated by quick-release fastening systems comprising springs, buttons, levers, eccentrics.

The skiing equipment 1 can comprise a control unit for at least the mover 5, particularly at least the motor 51 associated with each ski 2.

The unit can comprise an electronic board.

The unit can be integrated into the mover 5 and, for example, be constrained to the frame 54. In this case, the connection apparatus 7 is configured to electrically connect the unit to the battery, which thus also powers said control unit. Alternatively, the control unit is constrained to the battery 6 and, in this case, the apparatus 7 is configured to define a data connection between the control unit and the motor 51, and thus the bindings 71 and 72 and the at least one cable 73 are configured to define said electrical connection between the motor 51 and the battery and said data connection between the unit and the motor 51. Also, in this case, the control unit is powered by said battery.

The unit can comprise a data connection antenna to an external processor configured to allow a user to control the skiing equipment 1. Said external processor can be a smartphone.

The operation of the skiing equipment 1 previously described in structural terms is as follows.

Initially, with the return block 8 in the inactive position, the user places the belt 31 around the ski, preferably inserting the rib 33 into the groove made on the ski 2. Then constrains the first end 31a by inserting the wedge 322a into the seat 321a and thus mutually engaging the slats 322 and 321, forming the hinge 32. At this point, he moves the return block 8 to the operating position, thus pulling the track 3, and the skiing equipment 1 is ready to be used.

After these operations, the user wears the boots and constrains each of them to a binding and thus to a ski 2, and is ready to use the equipment 1.

The user, for example via said external processor, commands the activation of the motor 51, which starts to control the sliding of the belt 31 and thus of the track 3 around the ski 2 along the development trajectory 3a. In detail, the motor 51 controls the rotation of the driving pulley 52a, which, using one or more teeth 52b inserted into the slots 31c, drags the track 3, which starts to slide along the trajectory 3a and, in particular, on the roller 82, suitably coming into exclusive contact with one or more rings 821.

Finally, the user extracts the wedge 322a from the seat 321a, releasing the hinge 32, removes the track 3 from the ski 2, and places each return block 8 in the inactive position. At this point, the user removes the mover 5 and the battery 6 from the ski 2, which can then be used as a normal ski.

The skiing equipment 1 according to the invention achieves significant advantages. Indeed, being integrated into a ski without substantially modifying its structure, it allows tackling an uphill slope with movements similar to those possible today but without particular effort.

Another advantage is that the skiing equipment 1 is easily implementable even on a known ski, making small modifications.

A further advantage lies in the fact that the skiing equipment 1 has high construction simplicity and low cost.

An important advantage is that the skiing equipment 1 allows having a ski 2 substantially similar to those for downhill skiing.

Indeed, the equipment 1 allows quickly and easily removing the track 3, the mover 5, and the battery 6, lightening the weight of the ski 2.

This aspect is also defined by the possibility of placing at least one return block in the inactive position, thus freeing the ends 2a and 2b of the ski 2.

This aspect presents high construction simplicity and low cost.

These advantages are also obtained thanks to the particular design of the return block 8 and/or the hinge 32, which ensure the correct functioning of the skiing equipment 1.

The invention is susceptible to variations within the scope of the inventive concept defined by the claims.

For example, in a non-limiting embodiment, the group 4 comprises only the profile 41 to which the tip portion 4a and the heel portion 4b are constrained. It is thus without supplementary profile.

In another non-limiting embodiment, the fastening group 4 comprises only one profile 41 engaging the entire binding.

In this context, all details are replaceable with equivalent elements, and the materials, shapes, and dimensions can be any.

## Claims

1. Skiing equipment (1) comprising
- a ski (2);
- a track (3) closed on itself defining a development trajectory (3a) closed around said ski (2);
- a mover (5) of said track (3) around said ski (2);
- a fastening group (4) to said ski (2) of at least one binding defining together with said ski (2) a channel (4c) for the sliding of said track (3);
and **characterized in that** said track (3) comprises
- a belt (31) wound longitudinally around said ski (2), passing through said channel (4c), and defining a first end (31a) and a second end (31b); and
- a hinge (32) constraining said ends (31a, 31b) together, and comprising
∘ a first slat (321) integral with said first end (31a), comprising a seat (321a) defining a first axis of predominant extension substantially perpendicular to the laying plane of said development trajectory (3a);
∘ a second slat (322) integral with said second end (31b), and comprising a wedge (322a) defining a second axis of predominant extension substantially parallel to said first axis of predominant extension and configured to be inserted into said seat (321a), constraining said first slat (321) to said second slat (322) and then said first end (31a) to said second end (31b);
and **in that**
- said wedge (322a) and said seat (321a) have a circular section allowing mutual rotation of said slats (321, 322).

2. Skiing equipment (1) according to claim 1, wherein said first slat (321) comprises a first plate (321b) constrained to said first end (31a) and a plurality of hollow cylinders (321c) defining said seat (321a) and mutually spaced along said predominant extension axis; and wherein said second slat (322) comprises a second plate (322b) constrained to said second end (31b) and a gangway (322c) protruding from said second plate (322b) and interposed between said wedge (322a) and said second plate (322b); wherein when said wedge (322a) is in said seat (321a), each of said gangways (322c) is interposed between two of said cylinders (321c), allowing mutual rotation between said slats (321, 322).

3. Skiing equipment (1) according to claim 2, wherein said first plate (321b) comprises a first housing for said first end (31a); and wherein said second plate (322b) comprises a second housing for said second end (31b) wherein each of said cylinders (321c) comprises at least one notch (321d) for the passage of said gangway (322c) when said wedge (322a) is moved relative to said seat (321a).

4. Skiing equipment (1) according to the previous claim, wherein said notch (321d) defines an extension of said first plate (321b) along said development trajectory (3a); and wherein said gangway (322c) defines an extension of said second plate (322b) along said development trajectory (3a).

5. Skiing equipment (1) according to at least one of the previous claims, wherein said hinge (32) has an extension substantially less than that of said belt (31) along a direction substantially perpendicular to said laying plane of said development trajectory (3a).

6. Skiing equipment (1) according to at least one of the previous claims, wherein said hinge (32) has, perpendicularly to the laying plane of said development trajectory (3a), an extension substantially less than 75% and at least equal to 30% of the extension of said belt (31); wherein said hinge (32) has a length substantially between 100% and 500% of the height of said belt (31).

7. Skiing equipment (1) comprising:
- a ski (2) defining a longitudinal direction (2a) barycentric to said ski (2) and two ends (2b, 2c);
- a track (3) closed on itself defining a closed development trajectory (3a) around said ski (2);
- a mover (5) of said track (3) around said ski (2);
- a fastening group (4) to said ski (2) for at least one binding defining together with said ski (2) a channel (4c) for the sliding of said track (3);
- a return block (8) of said track (3) at each of said ends (2b, 2c);
and **characterized by the fact that** each of said return blocks (8) comprises:
- an anchor (81) integral with said ski (2);
- a roller (82) for the sliding of said track (3);
- at least one arm (83) constraining said roller (82) to said anchor (81); and
- a hinge (84) configured to allow a rotation of said arm (83) and said roller (82) relative to said anchor (81) around a tilting axis (8a) between:
∘ an operating position wherein said roller (82) protrudes at least partially from said ski (2), and
∘ an inactive position wherein said roller (82) is entirely overlapped to said ski (2).

8. Skiing equipment (1) according to claim 7, wherein said roller (82) is hinged to said arm (83) defining a sliding axis (82a) parallel to said tilting axis (8a); and wherein in said operating position said sliding axis (82a) is arranged on the opposite side of said tilting axis (8a) relative to said longitudinal direction (2a).

9. Skiing equipment (1) according to at least one of claims 8, wherein said arm (83) is underpinned between said sliding axis (82a) and said tilting axis (8a) and comprises a first rod (831) defining a first longitudinal axis and constrained to said hinge (84) and a second rod (832) defining a second longitudinal axis and hinged to said roller (82); and wherein said first rod (831) has a length substantially equal to the distance between said tilting axis (8a) and said end (2a, 2b); and wherein said first longitudinal axis and said second longitudinal axis are mutually inclined at an angle between 170° and 120°.

10. Skiing equipment (1) according to at least one of claims 7-9, wherein said anchor (81) comprises a plate (811) for constraining to said ski (2) and, for each of said arms (83), a wing (812) protruding from said plate (811) on the opposite side of said ski (2); and wherein said return block (8) comprises a stop (86) configured to block said rotation of said arm (83) and said roller (82) relative to said anchor (81) by clamping said wing (812) to said arm (83) when said return block (8) is in said inactive position or in said operating position.

11. Skiing equipment (1) comprising:
- a ski (2) defining a longitudinal direction (2a);
- a track (3) closed on itself and wound longitudinally around said ski (2);
- a mover (5) of said track (3) around said ski (2) and comprising an electric motor (51);
- a fastening group (4) for at least one binding defining together with said ski (2) a channel (4c) for the sliding of said track (3);
- a battery (6) for powering said motor (51);
and **characterized by** comprising:
- a first fastening (71) configured to solidly bind said mover (5) to said ski (2);
- a second fastening (72) configured to solidly bind said battery (6) to said ski (2) on the opposite side to said mover (5) relative to said fastening group (4);
- at least one cable (73) connecting said first fastening (71) to said second connector (72);
and **by the fact that:**
- said first fastening (71) is configured to define an electrical connection between said motor (51) and said cable (73) and said second fastening (72) is configured to define an electrical connection between said battery (6) and said cable (73) so as to allow said motor (51) to be electrically powered by said battery (6).

12. Skiing equipment (1) according to claim 11, wherein said first fastening (71) is configured to solidly bind said mover (5) to said fastening group (4).

13. Skiing equipment (1) according to claim 12, wherein said fastening group (4) comprises at least one profile (41) constrained to said ski (2) and to said binding; wherein said first fastening (71) comprises a first connector (711) defining an electrical connection with said motor (51) and a mechanical constraint with said mover (5), at least one first supplementary connector (712) defining a mechanical binding with said ski (2) and an electrical connection with said at least one cable (73), and at least one first electrical connection (713) between said first connector (711) and said first supplementary connector (712); and wherein said first electrical connection (713) is integrated into said profile (41).

14. Skiing equipment (1) according to at least one of claim 12, wherein each of said at least one first supplementary connector (712) comprises a first cavity made in said ski (2) and a first jack integral with said first fastening (71) and configured to be inserted into said first cavity, achieving said mechanical constraint with said ski (2) and said electrical connection with said at least one cable (73).

15. Skiing equipment (1) according to at least one of claims 11-14, wherein said second fastening (72) comprises a second connector (721) defining an electrical connection and a mechanical constraint with said battery (6) and at least one second supplementary connector (722) defining a mechanical constraint between said second fastening (72) and said ski (2) and an electrical connection between said second fastening (72) and said at least one cable (73).
